## Europäisches Patentamt

## European Patent Office

## Office européen des brevets

(11) Publication number:

**0 096 833**

**B1**

# EUROPEAN PATENT SPECIFICATION

(45) Date of publication of patent specification: **09.12.87**

(51) Int. Cl.⁴: **B 65 H 51/22,** B 65 H 51/20

(21) Application number: **83105596.7**

(22) Date of filing: **07.06.83**

(54) Improved line accumulating device.

(30) Priority: **10.06.82 JP 100111/82**

(43) Date of publication of application:
**28.12.83 Bulletin 83/52**

(45) Publication of the grant of the patent:
**09.12.87 Bulletin 87/50**

(84) Designated Contracting States:
**AT CH DE FR GB IT LI NL SE**

(56) References cited:
**DE-A-2 623 455**
**DE-B-1 574 620**
**DE-C-1 084 798**
**DE-U-1 837 391**

(73) Proprietor: **Nippon Telegraph and Telephone Corporation**
**1-6 Uchisaiwaicho 1-chome Chiyoda-ku Tokyo (JP)**

(73) Proprietor: **SUMITOMO ELECTRIC INDUSTRIES LIMITED**
**No. 15, Kitahama 5-chome Higashi-ku Osaka-shi Osaka 541 (JP)**

(72) Inventor: **Mitsunaga, Yutaka**
**No. 30, Nukataminamigo Naka-machi Naka-gun Ibaraki (JP)**
Inventor: **Yamazaki, Takashi c/o Yokohama Works**
**Sumitomo Electric Ind., Ltd. No. 1, Taya-cho Totsuka-ku Yokohama-shi Kanagawa (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath Maximilianstrasse 58 D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a line accumulating device according to the preamble of claim 1.

When, for example in an optical fiber drawing line, an optical fiber is broken at a tension tester located between the line drawing machine and a winding unit, it becomes necessary to reattach the optical fiber to the bobbin of the winding unit. In order to prevent interruption of operation of the line drawing machine, it is necessary to provide a line accumulating device between the tension tester and the line drawing machine. In most optical fiber drawing operations which are carried out at a high speed, it is important that the tension of the fiber being drawn remain fairly constant while the fiber is accumulated. It is also beneficial that the device provides a large amount of accumulation while requiring little floor space in a production facility.

A line accumulating device comprising the features of the preamble of claim 1 is disclosed in DE—A—1 084 798. In the space between the two line accumulating members two arms are mounted for rotation about the axis of the line accumulating members. Each arm comprises a threaded shaft received by a threaded center hole provided in the associated line accumulating member. Each arm has, at its outer end, a member extending parallel to the axis of the line accumulating members and in the direction of the threaded shaft of the arm. A distributing guide wheel is rotatably mounted to the free end of the member. Driving means are provided to rotate the two arms in common whereby the arms may be moved in the lateral direction approaching the respective line accumulating member or separating therefrom due to the threaded engagement between the threaded shaft and the respective threaded center hole in the line accumulating member. Since the arms are provided in the space between the two line accumulating members, these two line accumulating members have to be separated by a distance of at least twice the width of the line accumulating members resulting in a minimum length of the device in the direction of the axis of the two line accumulating members equal to four times the width of the line accumulating member.

The problem to be solved by the invention is to improve a line accumulating device according to the preamble of claim 1 such that it has a compact structure.

This problem is solved by the features comprised by the characterising portion of claim 1.

According to the invention, the guide rollers which distribute the line to the line accumulating members are made to slide laterally relative to the body of the device. This eliminates the lateral movement of the arms and the structure to accommodate such a movement. Consequently, the device according to the invention has a simpler construction.

Advantageous embodiments are claimed by the subclaims.

One way of carrying out the invention is described in detailed below with reference to drawings which illustrate only one specific embodiment, in which:

Fig. 1 is a front view of an embodiment of a line accumulating device according to the invention;

Fig. 2 is a side view of a guide roller group in detail;

Fig. 3 shows a detail of a guide wheel mounted on a bar designated part C in Fig. 1; and

Fig. 4 shows a sectional view taken along the line B—B in Fig. 1.

Description of the Preferred Embodiment

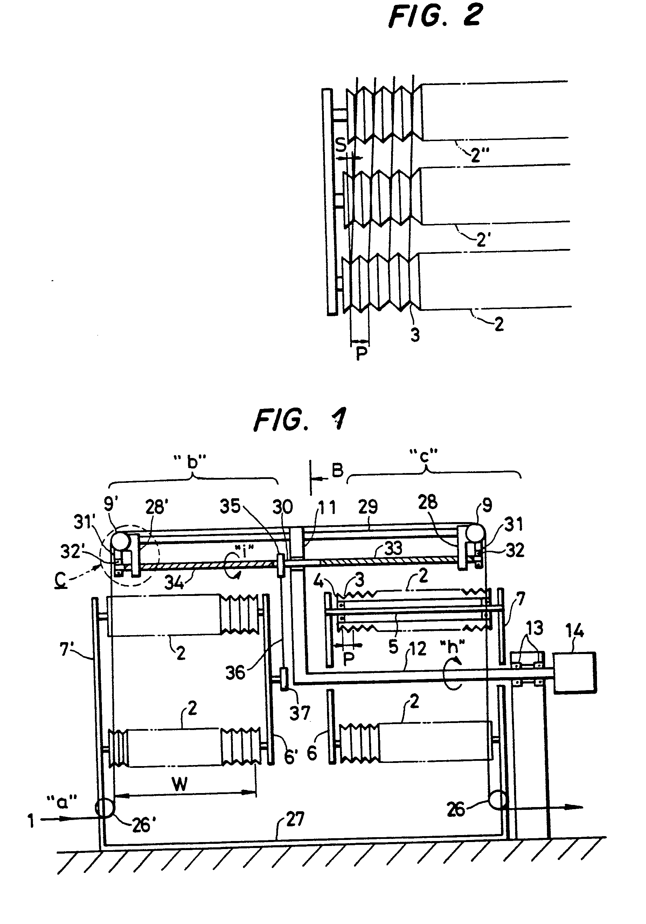

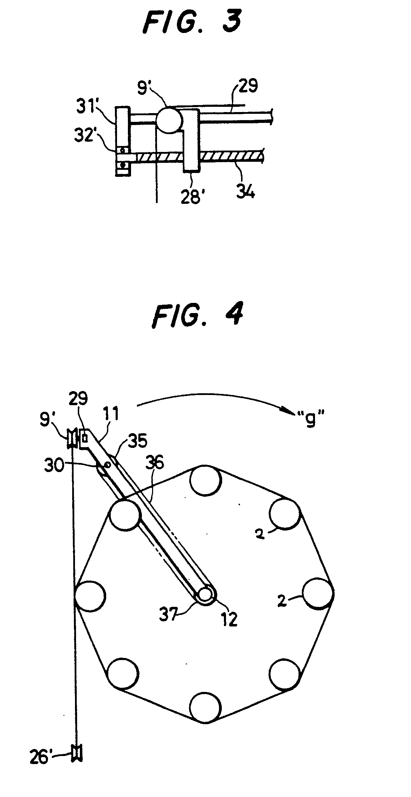

Fig. 1 is a front view of one embodiment of a fiber winding type line accumulating device. An optical fiber 1 moves in the direction of the arrows "a". The device has line accumulating guide rollers 2 shaped with a number of ring grooves 3 cut into the outer wall of each guide roller 2 at predetermined intervals "P". Each guide roller 2 is rotatably mounted through bearings 4 on a shaft 5. A plurality of shafts 5 are fixedly secured between side plates 6, 6', 7 and 7' in such a manner that their ends are arranged in a circle at equal intervals on the circumference thereof. Fig. 2 shows a plurality of guide rollers 2 arranged in such a manner that their ends form a circle spaced at equal intervals on the same circumference. As shown in Fig. 3, the guide rollers 2, 2' and 2'' are so arranged from one another such that their grooves 3 are shifted in the axial direction. Specifically, the grooves 3 of the guide rollers 2, 2' and 2'' are shifted by a distance "S" in the axial direction from one another. The distance "S" is equal to the distance "P" divided by the number of guide rollers 2 on the circumference, "n", (S = P/n).

The device contains two such groups "b" and "c" of guide rollers 2 which as shown in Fig. 1 confront each other. The side plates 7 and 7' are fixedly secured to a base 27. Guide wheels 26 and 26' for introducing the optical fiber strand to the guide roller groups "b" and "c" are mounted on the side plates 7 and 7', respectively. A shaft 12 extends along the central axis of the guide roller group "c" and is rotatably supported by bearings 13. The shaft 12 is driven by a variable speed motor 14 which is provided at one end of the shaft 12. An arm is secured to the other end of the shaft 12. The outer end of the arm 11 is secured to a guide bar 29.

As shown in Fig. 3, guide rollers 9 and 9' for distributing an optical fiber to the guide roller groups "b" and "c" are rotatably mounted on movable blocks 28 and 28', respectively, which move horizontally along the guide bar 29. A threaded shaft 30 is rotatably supported on the arm 11 and through bearings 32 and 32' on supports 31 and 31' which are secured to both ends of the guide bar 29. The threaded shaft 30 is arranged in parallel with the guide bar 29. The threaded shaft 30 has threaded parts 33 and 34 on both sides of the arm 11 which are engaged through nuts incorporated into the blocks 28 and 28', respectively. The threaded parts 33 and 34 are a right-handed screw and a left-handed screw, respectively. The pitch of the screws 33 and 34 is equal to the pitch of the grooves of the guide rollers 2. Therefore, when the threaded shaft 30 makes one revolution, the movable blocks 28 and 28' are displaced as accordingly determined by the pitch of the screws the distance between each thread. This distance is equal to the separation between grooves 3 of guide rollers 2. The movable blocks move in opposite direction to each other.

As shown in Figs. 1 and 4, a chain sprocket wheel 35 is mounted on the threaded shaft 30 and is coupled mechanically by a chain 36 to a chain sprocket wheel 37 mounted on the side plate 6' of the guide roller group "b" in such manner as to be coaxial with the shaft 12. Both chain sprocket wheels 35 and 37 have the same number of teeth. Therefore, one complete revolution of shaft 12 will cause the threaded shaft 30 to turn one complete revolution.

Under normal line drawing operations, the optical fiber advances through the guide wheel 26', the distributing guide wheels 9 and 9' and the guide wheel 26 in the direction of arrow "a" to the winding unit. When a break occurs, it is desirable to cease advancement of the optical fiber emerging from guide wheel 26 to the winding unit and maintain advancement of the optical fiber from the line drawing unit toward guide wheel 26'. The variable speed motor 14 is activated so that the shaft 12 is turned in direction of the arrow "h". As the shaft 12 is turned in this manner, the arm 11 and distributing guide rollers 9 and 9' are turned about the guide roller groups in the direction of the arrow "g" as shown in Fig. 4. This winds the optical fiber around the guide roller groups. Accordingly, the fiber is accumulated on the guide roller groups while being drawn out of the line drawing unit at a predetermined drawing speed without interruption.

Because the chain sprocket wheel 37 is coupled through the chain 36 to the chain sprocket wheel 35 on the threaded shaft 30, the chain sprocket wheel 35 is turned in the direction of the arrow "i" as shown in Fig. 2. This turns the threaded shaft 30 and, the guide wheels 9' and 9 are moved right and left by means of the threaded parts 33 and 34, respectively. As the optical fiber is accumulated on the guide roller groups, it is distributed evenly along the length of the guide rollers 2 by guide wheels 9 and 9' which move the distance "P" between each groove 3 of the guide rollers 2 for each winding of the optical fiber around the guide roller groups.

The device is designed to have a number of grooves 3 which provide for sufficient accumulation of fiber given the normal time required to restore the line drawing operation following a break in the fiber. At the point of maximum accumulation, the guide wheels 9 and 9' are positioned at the inner ends of threaded parts 33 and 34 closest to arm 11. Once the broken line is restored, the second taking unit is activated to take up the fiber at a rate higher than the line drawing speed. The variable speed motor 14 is then rotated in the opposite direction to unwind the fiber about the guide roller groups. Once the accumulated fiber is completely unwound, the rate of advancement of the fiber taken up by the second taking unit is reduced to equal the line drawing speed. Thus, the line drawing operation is returned to normal.

As is apparent from the description, in the line accumulating device of the invention the guide roller groups are fixed to the body of the device. This eliminates the need to laterally move the heaviest and bulkiest parts of the device. Therefore, the device of the invention is small in width and height and yields a low manufacturing cost. Furthermore, the device of the invention is advantageous in that only a small space is required for installation and the device can be added to an optical fiber drawing operation without considerable modification to provide spacing between devices.

## Claims

1. A line accumulating device comprising:
two stationary line accumulating members (2, 6, 7 and 2, 6', 7') which are confronted with each other in such a manner as to be coaxial with each other,
distributing guide wheels (9, 9') which are turnable about said line accumulating members (2, 6, 7 and 2, 6', 7') and are laterally movable in opposite directions with respect to the axis of the line accumulating members (2, 6, 7 and 2, 6', 7'), and
means (28, 28', 33 to 37) for moving said distribution guide wheels (9, 9') at a predetermined pitch with respect to the axis of said line accumulating members (2, 6, 7 and 2, 6', 7'),
characterised in that
a shaft (12) driven by a variable speed motor (14) is extending along the central axis of one of said line accumulating members (2, 6, 7 and 2, 6', 7'),
said guide wheels (9, 9') are mounted to a common support (29) fixed to said shaft (12).

2. The device as claimed in claim 1, characterised in that each of said line accumulating members (2, 6, 7 and 2, 6', 7') comprises a group of guide rollers (2) which are rotatably arranged at equal intervals on a circumference, each guide roller (2) having grooves (3) arranged at predetermined intervals (P), and said distributing guide wheels (9, 9') are moved as much as the pitch (P) of said grooves (3) whenever said shaft (12) makes one revolution.

3. The device as claimed in claim 1 or 2, to be used for winding an optical fiber on or rewinding the same from a line accumulating member.

## Patentansprüche

1. Fadenspeichereinrichtung mit:
zwei ortsfesten Fadenspeicherelementen (2, 6, 7, und 2, 6′, 7′) die einander derart gegenüberstehen, daß sie koaxial zueinander sind,

Verteilungsführungsrädern (9, 9′), die um die Fadenspeicherelemente (2, 6, 7 und 2, 6′, 7′) herum drehbar und in entgegengesetzte Richtungen in Bezug auf die Achsen der Fadenspeicherelemente (2, 6, 7 und 2, 6′, 7′) quer bewegbar sind, und

Mitteln (28, 28′, 33 bis 37) zur Bewegung der Verteilungsführungsräder (9, 9′) mit einer vorbestimmten Schrittweite in Bezug auf die Achse der Fadenspeicherelemente (2, 6, 7 und 2, 6′, 7′),

dadurch gekennzeichnet, daß

sich ein von einem Motor (14) veränderbarer Geschwindigkeit angetriebene Welle (12) längs der Mittelachse eines der Fadenspeicherelemente (2, 6, 7 und 2, 6′, 7′) erstreckt,

die Führungsräder (9, 9′) an einer gemeinsamen Halterung (29) angebracht sind, die an der Welle (12) befestigt ist.

2. Einrichtung nach Anspruch 1, dadurch gekennzeichnet, daß jedes der Fadenspeicherelemente (2, 6, 7 und 2, 6′, 7′) eine Gruppe von Führungsrollen (2) umfaßt, die auf einem Umfang gleich beabstandet drehbar angeordnet sind, wobei jede Führungsrolle (2) mit vorbestimmten Abständen (P) angeordnete Nuten (3) aufweist, und die Verteilungsführungsräder (9, 9′) ebensoweit wie der Abstand (P) der Nuten (3) bewegt werden, wenn immer die Welle (12) eine Umdrehung durchführt.

3. Einrichtung nach Anspruch 1 oder 2, zur Verwendung zum Aufwickeln einer optischen Faser auf ein Fadenspeicherelement oder zum Abwickeln von diesem.

## Revendications

1. Dispositif accumulateur de ligne comprenant:

deux éléments accumulateurs de ligne stationnaires (2, 6, 7, 2′, 6′, 7′) qui sont disposés face à face de manière à être coaxiaux l′un à l′autre,

des poulies de guidage distributrices (9, 9′) que l′on peut faire tourner autour desdits éléments accumulateurs de ligne (2, 6, 7 et 2′, 6′, 7′) et qui peuvent se déplacer latéralement l′une en sens inverse de l′autre, par rapport à l′axe des éléments accumulateurs de ligne (2, 6, 7 et 2′, 6′, 7′), et

des moyens (28, 28′, 33 à 37) servant à déplacer lesdites poulies de guidage distributrices (9, 9′) à un pas prédéterminé le long de l′axe desdits éléments accumulateurs de ligne (2, 6, 7 et 2′, 63, 7′),

caractérisé en ce

qu′un arbre (12) entraîné par un moteur à vitesse variable (14) s′étend le long de l′axe central de l′un desdits éléments accumulateurs de ligne (2, 6, 7 et 2′, 6′, 7′),

que lesdites poulies de guidage (9, 9′) sont montées sur un support commun (29) fixé audit arbre (12).

2. Dispositif selon la revendication 1, caractérisé en ce que chacun desdits éléments accumulateurs de ligne (2, 6, 7 et 2′, 6′, 7′) comprend un groupe de rouleaux de guidage (2) qui sont montés rotatifs à intervalles réguliers sur une circonférence, chaque rouleau de guidage (2) possédant des gorges (3) disposées à intervalles prédéterminés (P) et en ce que lesdites poulies de guidage distributrices (9, 9′) se déplacent d′une distance égale au pas (P) desdites gorges (3) chaque fois que ledit arbre (12) fait un tour.

3. Dispositif selon l′une des revendications 1 et 2, destiné à être utilisé pour enrouler une fibre optique sur un élément accumulateur de ligne ou pour l′en dérouler.

0 096 833

*FIG. 2*

*FIG. 1*

1

# FIG. 3

# FIG. 4